# EUROPÄISCHE PATENTSCHRIFT

(11) **EP 4 127 612 B1**
(45) Veröffentlichungstag und Bekanntmachung des Hinweises auf die Patenterteilung: **01.05.2024**
(21) Anmeldenummer: 21710935.4
(22) Anmeldetag: 08.03.2021
(51) Int. Cl.: G01F 1/84, G01F 25/00, G01F 1/74, G01F 15/06, G01F 25/10

(54) **VERFAHREN ZUM BETREIBEN EINES CORIOLIS-MESSGERÄTS**
METHOD FOR OPERATING A CORIOLIS MEASUREMENT DEVICE
PROCÉDÉ DE FONCTIONNEMENT D'UN DISPOSITIF DE MESURE À EFFET CORIOLIS

(30) Priorität: 31.03.2020 DE 102020108849
(43) Veröffentlichungstag der Anmeldung: 08.02.2023
(73) Patentinhaber: Endress + Hauser Flowtec AG, 4153 Reinach (CH)
(72) Erfinder: POHL, Johan, 79110 Freiburg (DE); ZHU, Hao, 85354 Freising (DE)
(74) Vertreter: Hahn, Christian
(86) Internationale Anmeldenummer: PCT/EP2021/055738
(87) Internationale Veröffentlichungsnummer: WO 2021/197764

(56) Entgegenhaltungen:
- WO-A1-2012/016581
- DE-T2- 69 531 026
- US-A1- 2007 262 814
- US-A1- 2011 011 186
- US-A1- 2014 076 035

## Beschreibung

Die Erfindung betrifft ein Verfahren zum Betreiben eines Coriolis-Messgeräts zum Messen einer Dichte und/oder eines Massedurchflusses eines durch eine Rohrleitung strömenden Messgeräts. Bei Coriolis-Messgeräten, siehe dazu beispielsweise die DE102016125537A1, wird zumindest ein Messrohr zu Schwingungen angeregt. Ein durch das Messrohr strömendes Medium verursacht dabei charakteristische Verzerrungen dieser Schwingungen. Diese Schwingungen werden dabei üblicherweise von zwei Sensoren erfasst und von einer elektronischen Mess-/Betriebsschaltung ausgewertet. Aufgrund von Fertigungsungenauigkeiten sind die Sensoren messtechnisch sehr häufig leicht asymmetrisch, was bedeutet, dass bei Nulldurchfluss ein geringer Durchfluss gemessen wird. Diese Asymmetrie kann nach einer initialen Kalibrierung des Messgeräts korrigiert werden. Abweichungen von dieser Kalibration stellen eine eigene Messgröße dar. Jedoch kann diese Messgröße stark verrauscht sein. WO2012016581 offenbart einen Coriolis-Durchflussmesser, der die zwischen den Durchflussrohren gemessene Asymmetrie überwacht, um seinen Betriebszustand zu überprüfen.

Aufgabe der Erfindung ist es daher, ein Verfahren vorzuschlagen, mittels welchem die Messwerte der Messgröße betreffend Abweichungen der Sensorasymmetrie von einem Ursprungszustand stabilisiert werden.

Die Aufgabe wird gelöst durch ein Verfahren gemäß dem unabhängigen Anspruch 1.

Bei einem erfindungsgemäßen Verfahren zum Betreiben eines Coriolis-Messgeräts zum Messen einer Dichte und/oder eines Massedurchflusses eines durch eine Rohrleitung strömenden Mediums, umfasst das Coriolis-Messgerät zumindest ein Messrohr zum Führen des Mediums mit jeweils einem Einlauf und einem Auslauf und eine ein Messrohrlumen einschließende Messrohrwandung; zumindest einen Erreger zum Erzeugen von Messrohrschwingungen sowie einen einlaufseitigen ersten Sensor und einen auslaufseitigen zweiten Sensor zum Erfassen von Messrohrschwingungen, wobei der Erreger sowie die Sensoren jeweils eine Spulenvorrichtung mit mindestens einer Spule und jeweils eine Magnetvorrichtung mit mindestens einem Magnet aufweisen,
wobei die Spulenvorrichtung sowie die Magnetvorrichtung eines jeden Sensors durch Messrohrschwingungen relativ zueinander bewegt werden, wobei in der Spule dabei eine elektrische Messspannung induziert wird;
eine elektronische Mess-/Betriebsschaltung zum Betreiben des Erregers, zum Erfassen und Auswerten der elektrischen Messspannungen sowie zum Ausgeben von Messwerten von Dichte und/oder Massedurchflusses sowie von Diagnoseangaben,
wobei das Verfahren folgende Schritte aufweist:
   Aufnehmen der Messspannungen der Sensoren sowie Erstellen einer Asymmetrie-Wertefolge mittels der Amplituden der Messpannungen zwecks Diagnose des Coriolis-Messgeräts in einem ersten Verfahrensschritt,
   Aufnehmen eines Messsignals zumindest einer Stabilisierungsgröße in einem zweiten Verfahrensschritt,
   Erstellen einer stabilisierten Asymmetrie-Wertefolge basierend auf der Asymmetrie-Wertefolge in Abhängigkeit von der Stabilisierungsgröße in einem dritten Verfahrensschritt,
   wobei die Stabilisierungsgröße auf einer der folgenden Größen oder einer ersten oder zweiten zeitlichen Ableitung davon basiert:
      eine Resonanzfrequenz des Messrohrs mit Medium oder eine davon abgeleitete Größe,
      Zeit- oder Phasendifferenz zwischen Messsignalen des ersten Sensors und des zweiten Sensors oder eine davon abgeleitete Größe,
      Temperatur der Messrohrwandung,
      Temperaturdifferenz zwischen zwei Messpunkten der Messrohrwandung.

Der erste Verfahrensschritt und der zweite Verfahrensschritt können auch in umgekehrter Reihenfolge oder auch zeitgleich erfolgen.

Zur Erstellung der Asymmetrie-Wertefolge kann dabei ein Verhältnis einer absoluten Abweichung von Amplituden der Messspannungen zu einem Mittelwert der Amplituden der Messspannungen gebildet werden.

Insbesondere kann dabei ein zeitliches Mittel von Absolutwerten der ersten oder zweiten zeitlichen Ableitung der Größen für die Stabilisierungsgröße herangezogen werden.

In einer Ausgestaltung wird ein Streuungswert der Messwerte einer Stabilisierungsgröße bestimmt, wobei das Asymmetrie-Messwert mittels des Streuungswerts stabilisiert wird.

In einer Ausgestaltung wird bei Überschreiten eines ersten Grenzwerts durch den Streuungswert ein letzter gültiger Wert der Asymmetrie-Wertefolge als aktueller Wert der Asymmetrie-Wertefolge herangezogen, oder die Asymmetrie-Wertefolge auf einen vorherbestimmten Wert gesetzt.

Vorherbestimmte Werte können beispielsweise Null oder NaN (Not a number) oder sonstige Werte sein, welche eine Ungültigkeit der Asymmetrie-Wertefolge zu gewissen Zeitpunkten oder in gewissen Zeitbereichen hervorheben. Auf diese Weise kann die elektronische Mess-/Betriebsschaltung erkennen, ob Werte der Asymmetrie-Wertefolge Messwerten der Asymmetrie entsprechen, oder ob die Werte im Hinblick auf eine Bestimmung beispielsweise eines Coriolis-Messgerätzustands zu ignorieren sind.

Insbesondere bei einem Medium mit mehreren Medienbestandteilen gegebenenfalls in verschiedenen Aggregatzuständen vorliegend kann die Asymmetrie-Wertefolge zeitweise stark von einem Durchschnittswert abweichen und somit störend verfälscht sein, so dass ein Ersetzen von Werten der Asymmetrie-Wertefolge durch einen letzten gültigen Wert oder durch einen vorbestimmten Wert eine deutlich stabilere Asymmetrie-Wertefolge liefert.

In einer Ausgestaltung wird ein Mittelwert von Messwerten einer Stabilisierungsgröße gebildet, wobei der erste Grenzwert aus dem Streuungswert und/oder dem Mittelwert abgeleitet wird, oder wobei der erste Grenzwert ein konfigurierter bzw. konfigurierbarer bzw. ein vorher festgelegter Wert ist. Der erste Grenzwert kann beispielsweise über eine relative oder absolute Abweichung zu einer üblichen Streuung bei einem einphasigen Medium oder einem reinen Medium festgelegt werden.

In einer Ausgestaltung ist der Mittelwert ein gleitender Mittelwert mit einem ersten Zeitfenster, und wobei der Streuungswert ein gleitender Streuungswert mit einem zweiten Zeitfenster ist.

Auf diese Weise kann die Berechnung eines Mittelwerts und des Streuungswerts an eine Messsituation bzw. Messstelle angepasst werden, so dass die Stabilisierung der Asymmetrie-Wertefolge gelingt.

In einer Ausgestaltung weist das erste Zeitfenster eine Zeitdauer von mindestens 0.2 Sekunden und insbesondere mindestens 0.5 Sekunden und bevorzugt mindestens 1 Sekunde auf und/oder das erste Zeitfenster weist eine Zeitdauer von höchstens 90 Sekunden und insbesondere höchstens 70 Sekunden und bevorzugt höchstens 60 Sekunden auf.

In einer Ausgestaltung weist das zweite Zeitfenster eine Zeitdauer von mindestens 2 Sekunden und insbesondere mindestens 4 Sekunden und bevorzugt mindestens 5 Sekunden auf und/oder wobei das zweite Zeitfenster eine Zeitdauer von höchstens 150 Sekunden und insbesondere höchstens 130 Sekunden und bevorzugt höchstens 120 Sekunden aufweist.

In einer Ausgestaltung wird falls die Zeit- oder Phasendifferenz oder eine davon abgeleitete Größe einen zweiten Grenzwert unterschreitet und die Asymmetrie einen dritten Grenzwert überschreitet,
ein letzter gültiger Messwert der Asymmetrie-Wertefolge als aktueller Wert der Asymmetrie-Wertefolge herangezogen,
oder die Asymmetrie-Wertefolge auf einen vorherbestimmten Wert gesetzt.

Auf diese Weise kann eine Asymmetrie verursachende Teilfüllung des Messrohrs bei stehendem Medium erkannt und aussortiert werden. Der zweite Grenzwert kann dabei beispielsweise einem Wert von weniger als 5% und insbesondere weniger als 1% und bevorzugt weniger als 0.1% eines maximalen spezifizierten Massedurchflusses entsprechen. Der dritte Grenzwert kann beispielsweise eine Asymmetrie von mindestens 0.1 % und insbesondere mindestens 1% und bevorzugt mindestens 5% sein.

In einer Ausgestaltung wird der Streuungswert durch eine der folgenden Vorgehensweisen bestimmt:
Summieren über Abstände benachbarter Messwerte,
Summieren über Abstände der Messwerte zu einem Mittelwert von Messwerten der Stabilisierungsgröße.

In einer Ausgestaltung weist ein Abstandsmaß A folgenden Zusammenhang auf:
A=|p1 - p2|^n mit n > 0, und p1 als Messwert und p2 als Messwert oder ein Mittelwert.

Bevorzugt ist n dabei eine Zahl größer 0.5 und maximal 4. Es ist dabei nicht ausgeschlossen, dass der Zusammenhang weitere Terme aufweist oder mittels eines Faktors abgeändert wird.

In einer Ausgestaltung wird eine Warnung ausgegeben, falls ein Betrag der stabilisierten Asymmetrie-Wertefolge einen Grenzwert überschreitet.

Im Folgenden wird die Erfindung anhand von Ausführungsbeispielen beschrieben.
Fig. 1 beschreibt ein beispielhaftes Coriolis-Messgerät;
Fig. 2 zeigt beispielhafte Verläufe von Messsignalen;
Fig. 3 skizziert den Ablauf eines erfindungsgemäßen Verfahrens;
Fig. 4 skizziert den Verlauf einer stabilisierten Asymmetrie-Wertefolge.

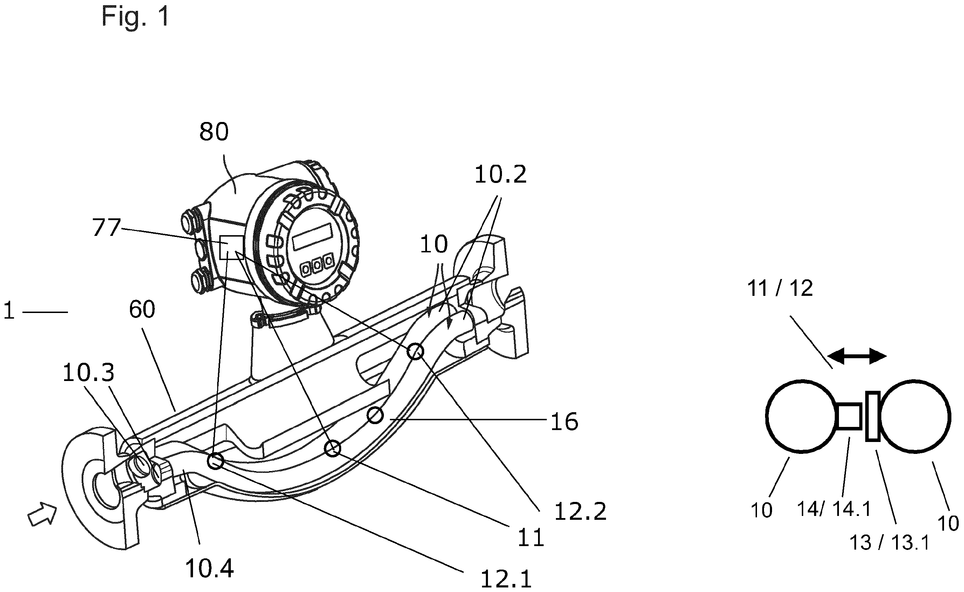

Fig. 1 zeigt ein beispielhaftes Coriolis-Messgerät 1 zum Messen eines Massedurchflusses oder einer Dichte eines durch eine Rohrleitung strömenden Mediums umfassend zwei Messrohre 10 mit jeweils einem Einlauf 10.1 und einem Auslauf 10.2, wobei eine Messrohrwandung 10.4 ein Messrohrlumen 10.3 einschließt. Die Messrohre werden durch einen Erreger 11 zum Schwingen angeregt, ein einlaufseitiger erster Sensor 12.1 und ein auslaufseitiger zweiter Sensor 12.2 erfassen die Messrohrschwingungen und erzeugen Messsignale, welche durch eine in einem Gehäuse 80 angeordnete elektronische Mess-/Betriebsschaltung 77 ausgewertet werden. Die Messrohre werden dabei durch einen Trägerkörper gehalten. Sensor und Erreger können dabei wie hier gezeigt, jeweils eine Spulenvorrichtung 13 mit einer Spule 13.1 und eine Magnetvorrichtung 14 mit einem Magnet 14.1 aufweisen, wobei Spulenvorrichtung und Magnetvorrichtung durch Messrohrschwingungen Relativbewegungen erfahren. Durch die Relativbewegung werden in der Spule elektrische Spannungen induziert und somit elektrische Ströme verursacht, welche von der elektronischen Mess-/Betriebsschaltung verarbeitet werden. Das Messsignal kann dabei die elektrische Spannung oder der elektrische Strom sein. Da auch bei Coriolis-Messgeräten Ungenauigkeiten bei der Produktion und bei der Fertigung existieren, sind verschiedene Sensoren nicht exakt gleich, so dass sie unter gleichen Bedingungen leicht unterschiedliche Messsignale produzieren, was sich beispielsweise in unterschiedlichen Amplituden von Messsignalen äußert. Diese Asymmetrie zwischen den Sensoren kann als weitere Messgröße genutzt werden, um beispielsweise einen Betriebszustand oder einen Abnutzungszustand des Coriolis-Messgeräts erkennen zu können. Coriolis-Messgeräte können wie hier angedeutet auch mindestens einen Temperatursensor 16 aufweisen, welche die Temperatur der Messrohrwandung erfassen.

Coriolis-Messgeräte können auch nur ein Messrohr oder auch mehr als zwei Messrohre aufweisen. Ein Fachmann wird den Erreger sowie die Sensoren dann entsprechend anpassen. So ist es nicht nötig, dass Spulenvorrichtung und Magnetvorrichtung jeweils an einem Messrohr angeordnet sind, sondern sie können beispielsweise auch über eine Haltevorrichtung am Trägerkörper befestigt sein. Coriolis-Messgeräte können auch mehr als einen Erreger und/oder auch mehr als zwei Sensoren aufweisen.

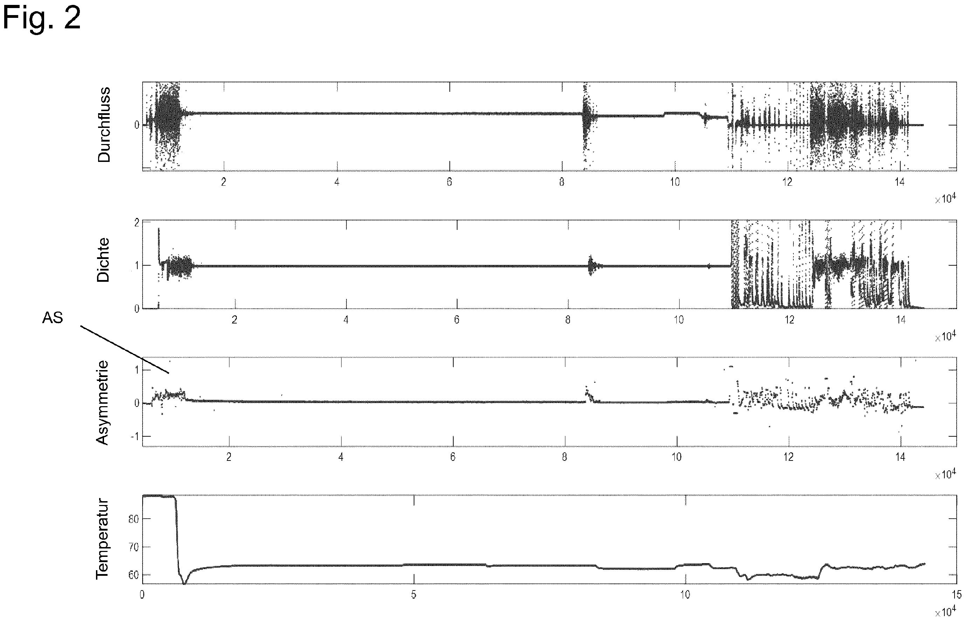

Fig. 2 skizziert beispielhafte Verläufe von Messsignalen betreffend Massedurchfluss, Dichte, Asymmetrie der Sensoren und einer Temperatur der Messrohrwandung. Die Skalierung der Achsen ist dabei in beliebigen Einheiten gegeben und rein beispielhaft. Bei homogenem Medium ist der Verlauf von gemessener Dichte und gemessenem Durchfluss gewöhnlich wenig veränderlich. Bei einem Medium mit verschiedenen nicht oder schwer mischbaren Anteilen und/oder Anteilen mit verschiedenen Aggregatzuständen kann es wie in den beispielhaften Messsignalkurven gezeigt zu kurzfristigen, plötzlich einsetzenden und plötzlich aussetzenden Signalschwankungen kommen. Diese sind darauf zurückzuführen, dass im Bereich der Sensoren lokale Schwankungen der Mediumszusammensetzung die Messrohre im Bereich der Sensoren unterschiedlich beeinflussen. Während solcher Phasen ist die Asymmetrie-Wertefolge AS nicht zu gebrauchen.

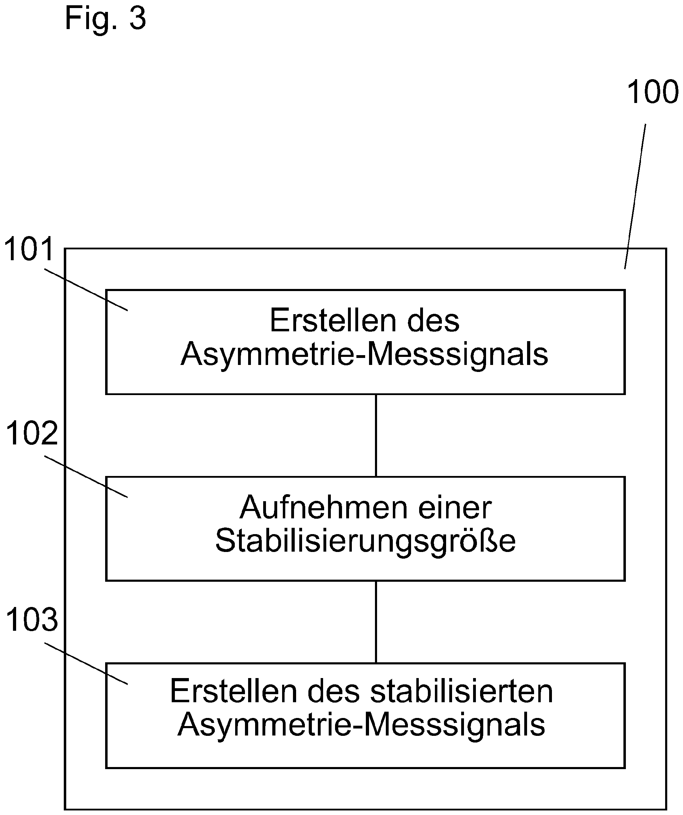

Fig. 3 beschreibt den Ablauf eines beispielhaften erfindungsgemäßen Verfahrens zur Stabilisierung der Asymmetrie-Wertefolge.

In einem ersten Verfahrensschritt 101 wird aus den Messsignalen der Sensoren 12.1 und 12.2 eine Asymmetrie-Wertefolge AS erstellt, wobei beispielsweise auf Amplituden der Messsignale der Sensoren zurückgegriffen wird.

In einem zweiten Verfahrensschritt 102 wird ein Messsignal zumindest einer Stabilisierungsgröße aufgenommen, welches Messsignal herangezogen wird, um eine Gültigkeit der Asymmetrie-Wertefolge zu bestimmen.

In einem dritten Verfahrensschritt 103 wird die Asymmetrie-Wertefolge mittels der Stabilisierungsgröße stabilisiert und eine Asymmetrie-Wertefolge SAS gebildet.

Der erste Verfahrensschritt und der zweite Verfahrensschritt können auch in umgekehrter Reihenfolge oder auch gleichzeitig durchgeführt werden. Die Reihenfolge der Verfahrensschritte ist nur durch Kausalität beschränkt. Die Stabilisierungsgröße ist dabei eine der folgenden Größen oder eine erste oder weitere zeitliche Ableitung davon:
eine Resonanzfrequenz des Messrohrs mit Medium oder eine davon abgeleitete Größe wie beispielsweise Dichte des Mediums,
Zeit- oder Phasendifferenz zwischen Messsignalen des ersten Sensors und des zweiten Sensors oder eine davon abgeleitete Größe wie beispielsweise Massedurchfluss,
Temperatur der Messrohrwandung,
Temperaturdifferenz zwischen zwei Messpunkten der Messrohrwandung.

Beispielsweise wird eine Streuung des Messsignals der Stabilisierungsgröße bestimmt und bei Überschreiten eines ersten Grenzwerts durch den Streuungswert ein letzter gültiger Messwert der Asymmetrie-Wertefolge als aktueller Wert des Asymmetrie-Messwerts herangezogen, oder die Asymmetrie-Wertefolge auf einen vorherbestimmten Wert gesetzt. Auf diese Weise kann die Asymmetrie-Wertefolge so aufgearbeitet werden, dass es beispielsweise von der elektronischen Mess-/Betriebsschaltung auf eine sinnvolle Art und Weise interpretiert und verarbeitet werden kann. Typische Werte für einen vorbestimmten Wert sind beispielsweise NaN (Not a number), 0, oder ein Wert außerhalb eines typischen Wertebereichs der Asymmetrie-Wertefolge wie beispielsweise 1000. Dies ist unter Stabilisierung der Asymmetrie-Wertefolge zu verstehen. Der erste Grenzwert kann aus Streuungswerten der Messwerte der Stabilisierungsgröße und/oder einem Mittelwert von Messwerten der Stabilisierungsgröße abgeleitet werden. Bei der Ableitung des ersten Grenzwerts kann der Mittelwert M ein gleitender Mittelwert mit einem ersten Zeitfenster Z1, und der Streuungswert S ein gleitender Streuungswert mit einem zweiten Zeitfenster Z2 sein, welche Zeitfenster auf das zugehörige Messsignal angelegt werden. Beispielsweise kann eine relative oder absolute Mindestabweichung vom Mittelwert als ein erster Grenzwert definiert werden. Es kann eine Summe von Abständen von benachbarten Messwerten innerhalb des Zeitfensters Z2 gebildet werden, um die Streuung zu berechnen. Es kann auch eine Summe von Abständen von Messwerten zum Mittelwert innerhalb des Zeitfensters Z2 gebildet werden, um die Streuung zu berechnen, wobei der Mittelwert aus Messwerten innerhalb eines Zeitfensters Z1 gebildet ist.

Beispielsweise weist das erste Zeitfenster Z1 eine Zeitdauer von mindestens 0.2 Sekunden und insbesondere mindestens 0.5 Sekunden und bevorzugt mindestens 1 Sekunde auf und/oder wobei das erste Zeitfenster eine Zeitdauer von höchstens 90 Sekunden und insbesondere höchstens 70 Sekunden und bevorzugt höchstens 60 Sekunden aufweist. Beispielsweise weist das zweite Zeitfenster Z2 eine Zeitdauer von mindestens 2 Sekunden und insbesondere mindestens 4 Sekunden und bevorzugt mindestens 5 Sekunden auf und/oder wobei das zweite Zeitfenster eine Zeitdauer von höchstens 150 Sekunden und insbesondere höchstens 130 Sekunden und bevorzugt höchstens 120 Sekunden aufweist. Es ist nicht ausgeschlossen, dass das erste Zeitfenster und das zweite Zeitfenster gleich sind.

Als Abstandsmaß A kann dabei folgender Zusammenhang herangezogen werden: A=|p1 - p2|^n mit n > 0, und p1 als Messwert und p2 als Messwert oder ein Mittelwert.

Ein weiterer Grund für ungültige Messwerte der Asymmetrie-Wertefolge kann eine nur teilweise Füllung des mindestens einen Messrohrs des Coriolis-Messgeräts sein. In diesem Fall können die Amplituden der Messsignale der Sensoren stark voneinander abweichen. Eine nur teilweise Füllung kann beispielsweise bei einer vertikalen Ausrichtung des mindestens einen Messrohrs erfolgen, wenn aufgrund fehlenden Durchflusses ein Flüssigkeitsspiegel des Messrohrs auf ein Niveau zwischen erstem Sensor und zweitem Sensor absinkt. Dies kann erkannt werden durch Überprüfen der Zeit- oder Phasendifferenz oder einer davon abgeleiteten Größe und der Asymmetrie-Wertefolge.

Falls die Zeit- oder Phasendifferenz oder eine davon abgeleitete Größe einen zweiten Grenzwert unterschreitet und die Asymmetrie einen dritten Grenzwert überschreitet, dann wird auf eine Teilfüllung erkannt und ein letzter gültiger Messwert der Asymmetrie-Wertefolge als aktueller Wert der Asymmetrie-Wertefolge herangezogen, oder die Asymmetrie-Wertefolge auf einen vorherbestimmten Wert gesetzt.

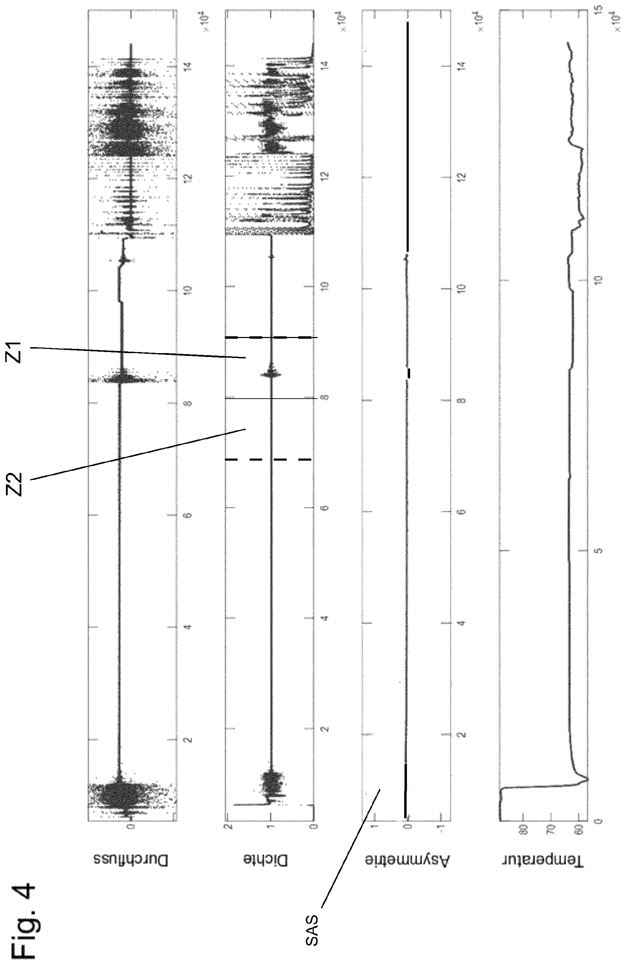

Fig. 4 skizziert beispielhafte Verläufe von Messsignalen betreffend Massedurchfluss, Dichte, Asymmetrie der Sensoren und einer Temperatur der Messrohrwandung, wobei die Asymmetrie-Wertefolge nun eine stabilisierte Asymmetrie-Wertefolge SAS ist. Beispielhaft sind ein Zeitfenster Z1 (durchgezogene Linien) und ein Zeitfenster Z2 (gestrichelte Linien) beim Verlauf der Messwerte der Dichte eines Mediums skizziert, welche zu einem Zeitpunkt auf das Messsignal der Dichte angewandt werden und mit einem aktuellen Zeitpunkt mitgezogen werden. Durch die weiter oben beschriebene Vorgehensweise können ungültige Messwerte der Asymmetrie-Wertefolge erkannt und markiert bzw. korrigiert werden.

Generell kann eine Warnung ausgegeben werden, falls ein Betrag der stabilisierten Asymmetrie-Wertefolge SAS einen vierten Grenzwert G4 überschreitet. In diesem Fall kann eine Verschlechterung eines Messsystemzustands vorliegen, was eine Reparatur oder einen Austausch des Coriolis-Messgeräts zur Folge haben kann. Der vierte Grenzwert kann beispielsweise eine Asymmetrie von mindestens 0.1% und insbesondere mindestens 1% und bevorzugt mindestens 5% sein.

### Bezugszeichenliste

- 1: Coriolis-Messgerät
- 10: Messrohr
- 10.1: Einlauf
- 10.2: Auslauf
- 10.3: Messrohrlumen
- 10.4: Messrohrwandung
- 11: Erreger
- 12.1: erster Sensor
- 12.2: zweiter Sensor
- 13: Spulenvorrichtung
- 13.1: Spule
- 14: Magnetvorrichtung
- 14.1: Magnet
- 16: Temperatursensor
- 60: Trägerkörper
- 77: elektronische Mess-/Betriebsschaltung
- 80: Gehäuse
- 100: Verfahren
- 101: Verfahrensschritt
- 102: Verfahrensschritt
- 103: Verfahrensschritt
- AS: Asymmetrie-Wertefolge
- SAS: stabilisierte Asymmetrie-Wertefolge
- Z1: erstes Zeitfenster
- Z2: zweites Zeitfenster

## Patentansprüche

1. Verfahren (100) zum Betreiben eines Coriolis-Messgeräts (1) zum Messen einer Dichte und/oder eines Massedurchflusses eines durch eine Rohrleitung strömenden Mediums,
wobei das Coriolis-Messgerät umfasst:
zumindest ein Messrohr (10) zum Führen des Mediums mit jeweils einem Einlauf (10.1) und einem Auslauf (10.2) und eine ein Messrohrlumen (10.3) einschließende Messrohrwandung (10.4);
zumindest einen Erreger (11) zum Erzeugen von Messrohrschwingungen sowie einen einlaufseitigen ersten Sensor (12.1) und einen auslaufseitigen zweiten Sensor (12.2) zum Erfassen von Messrohrschwingungen, wobei der Erreger sowie die Sensoren jeweils eine Spulenvorrichtung (13) mit mindestens einer Spule (13.1) und jeweils eine Magnetvorrichtung (14) mit mindestens einem Magnet (14.1) aufweisen,
wobei die Spulenvorrichtung sowie die Magnetvorrichtung eines jeden Sensors durch Messrohrschwingungen relativ zueinander bewegt werden, wobei in der Spule dabei eine elektrische Messspannung induziert wird;
eine elektronische Mess-/Betriebsschaltung (77) zum Betreiben des Erregers, zum Erfassen und Auswerten der elektrischen Messspannungen sowie zum Ausgeben von Messwerten von Dichte und/oder Massedurchflusses sowie von Diagnoseangaben,
wobei das Verfahren den folgenden Schritt aufweist:
Aufnehmen der Messspannungen der Sensoren sowie Erstellen einer Asymmetrie-Wertefolge (AS) mittels der Amplituden der Messpannungen zwecks Diagnose des Coriolis-Messgeräts (101), **dadurch gekennzeichnet, dass** das Verfahren folgende Schritte aufweist:
Aufnehmen eines Messsignals zumindest einer Stabilisierungsgröße (102),
Erstellen einer stabilisierten Asymmetrie-Wertefolge (SAS) basierend auf der-Asymmetrie-Wertefolge in Abhängigkeit von der Stabilisierungsgröße (103),
wobei die Stabilisierungsgröße auf einer der folgenden Größen oder einer ersten oder zweiten zeitlichen Ableitung davon basiert:
eine Resonanzfrequenz des Messrohrs mit Medium oder eine davon abgeleitete Größe,
Zeit- oder Phasendifferenz zwischen Messsignalen des ersten Sensors und des zweiten Sensors oder eine davon abgeleitete Größe,
Temperatur der Messrohrwandung,
Temperaturdifferenz zwischen zwei Messpunkten der Messrohrwandung.

2. Verfahren nach Anspruch 1,
wobei ein Streuungswert (S) der Messwerte einer Stabilisierungsgröße bestimmt wird,
wobei die Asymmetrie-Wertefolge mittels des Streuungswerts stabilisiert wird.

3. Verfahren nach Anspruch 2,
wobei bei Überschreiten eines ersten Grenzwerts durch den Streuungswert
ein letzter gültiger Messwert der Asymmetrie-Wertefolge als aktueller Wert der Asymmetrie-Wertefolge herangezogen wird,
oder die Asymmetrie-Wertefolge auf einen vorherbestimmten Wert gesetzt wird.

4. Verfahren nach Anspruch 3,
wobei der erste Grenzwert aus Streuungswerten und/oder einem Mittelwert von Messwerten der Stabilisierungsgröße abgeleitet wird,
oder wobei der erste Grenzwert ein konfigurierbarer Parameter ist.

5. Verfahren nach einem der Ansprüche 2 bis 4,
wobei der Mittelwert ein gleitender Mittelwert mit einem ersten Zeitfenster (Z1) ist, und wobei der Streuungswert ein gleitender Streuungswert mit einem zweiten Zeitfenster (Z2) ist.

6. Verfahren nach Anspruch 5,
wobei das erste Zeitfenster (Z1) eine Zeitdauer von mindestens 0.2 Sekunden und insbesondere mindestens 0.5 Sekunden und bevorzugt mindestens 1 Sekunde und/oder wobei das erste Zeitfenster eine Zeitdauer von höchstens 90 Sekunden und insbesondere höchstens 70 Sekunden und bevorzugt höchstens 60 Sekunden aufweist.

7. Verfahren nach Anspruch 5 oder 6,
wobei das zweite Zeitfenster (Z2) eine Zeitdauer von mindestens 2 Sekunden und insbesondere mindestens 4 Sekunden und bevorzugt mindestens 5 Sekunden und/oder wobei das zweite Zeitfenster eine Zeitdauer von höchstens 150 Sekunden und insbesondere höchstens 130 Sekunden und bevorzugt höchstens 120 Sekunden aufweist.

8. Verfahren nach einem der vorigen Ansprüche,
wobei falls die Zeit- oder Phasendifferenz oder eine davon abgeleitete Größe einen zweiten Grenzwert unterschreitet und die Asymmetrie einen dritten Grenzwert überschreitet,
ein letzter gültiger Messwert der Asymmetrie-Wertefolge als aktueller Wert der Asymmetrie-Wertefolge herangezogen wird,
oder die Asymmetrie-Wertefolge auf einen vorherbestimmten Wert gesetzt wird.

9. Verfahren nach einem der Ansprüche 2 bis 8,
wobei der Streuungswert (S) durch eine der folgenden Vorgehensweisen bestimmt wird:
Summieren über Abstände benachbarter Messwerte,
Summieren über Abstände der Messwerte zu einem Mittelwert von Messwerten der Stabilisierungsgröße.

10. Verfahren nach Anspruch 9,
wobei ein Abstandsmaß A folgenden Zusammenhang aufweist:
A=|p1 - p2|^n mit n > 0, und p1 als Messwert und p2 als Messwert oder ein Mittelwert.

11. Verfahren nach einem der vorigen Ansprüche,
wobei eine Warnung ausgegeben wird, falls ein Betrag der stabilisierten Asymmetrie-Wertefolge (SAS) einen vierten Grenzwert überschreitet.

12. Verfahren nach einem der vorigen Ansprüche,
wobei das Coriolis-Messgerät zumindest einen Temperatursensor (16) aufweist.

## Claims

1. A method (100) for operating a Coriolis measuring device (1) for measuring a density and/or a mass flow of a medium flowing through a pipeline,
wherein the Coriolis measuring device comprises:
At least one measuring tube (10) for conducting the medium with one inlet (10.1) and one outlet (10.2), and one measuring tube wall (10.4) enclosing a measuring tube lumen (10.3); at least one exciter (11) for generating measuring tube vibrations and one inlet-side first sensor (12.1) and one outlet-side second sensor (12.2) for detecting measuring tube vibrations, wherein the exciter and the sensors each have one coil device (13) with at least one coil (13.1) and one magnetic device (14) with at least one magnet (14.1),
wherein the coil device and the magnetic device of each sensor are moved relative to each other by measuring tube vibrations, wherein an electrical measuring voltage is induced in the coil in the process;
an electronic measuring/operating circuit (77) for operating the exciter, for recording and analyzing the electrical measuring voltages, and for outputting measured values for density and/or mass flow and for diagnostics information, wherein the method has the following step:
Recording the measuring voltages of the sensors and creating an asymmetry value sequence (AS) using the amplitudes of the measuring voltages for the purpose of performing diagnostics on the Coriolis measuring device (101), **characterized in that** the method has the following steps:
Recording a measurement signal of at least one stabilization variable (102), creating a stabilized asymmetry value sequence (SAS) based on the asymmetry value sequence as a function of the stabilization variable (103),
wherein the stabilization variable is based on one of the following variables or a first or second time derivative:
A resonant frequency of the measuring tube with medium or a variable derived therefrom,
time or phase difference between measurement signals from the first sensor and the second sensor or a variable derived therefrom, temperature of the measuring tube wall,
temperature difference between two measuring points on the measuring tube wall.

2. The method as claimed in claim 1,
wherein a variance value (S) of the measured values of a stabilization variable is determined, wherein the asymmetry value sequence is stabilized using the variance value.

3. The method as claimed in claim 2,
wherein if the variance value exceeds a first limit value, a last valid measured value of the asymmetry value sequence is taken as the current value of the asymmetry value sequence,
or the asymmetry value sequence is set to a previously defined value.

4. The method as claimed in claim 3,
wherein the first limit value is derived from variance values and/or an average value of measured values of the stabilization variable,
or wherein the first limit value is a configurable parameter.

5. The method as claimed in one of claims 2 to 4,
wherein the average value is a moving average value with a first time window (Z1), and wherein the variance value is a moving variance value with a second time window (Z2).

6. The method as claimed in claim 5,
wherein the first time window (Z1) has a duration of at least 0.2 seconds, and in particular at least 0.5 seconds, and preferably at least 1 second, and/or wherein the first time window has a duration of up to 90 seconds, and in particular up to 70 seconds, and preferably up to 60 seconds.

7. The method as claimed in claim 5 or 6,
wherein the second time window (Z2) has a duration of at least 2 seconds, and in particular at least 4 seconds, and preferably at least 5 seconds, and/or wherein the second time window has a duration of up to 150 seconds, and in particular up to 130 seconds, and preferably up to 120 seconds.

8. The method as claimed in one of the preceding claims,
wherein if the time or phase difference, or a variable derived therefrom, is below a second limit value and the asymmetry exceeds a third limit value, a last valid measured value of the asymmetry value sequence is taken as the current value of the asymmetry value sequence,
or the asymmetry value sequence is set to a previously defined value.

9. The method as claimed in one of claims 2 to 8,
wherein the variance value (S) is determined by one of the following procedures:
Adding together the distances between adjacent measured values,
adding together the distances between the measured values to give an average value of measured values of the stabilization variable.

10. The method as claimed in claim 9,
wherein a distance measurement A has the following correlation:
A=|p1 - p2|^n where n > 0, and p1 is a measured value and p2 is a measured value or an average value.

11. The method as claimed in one of the preceding claims,
wherein a warning is issued if a sum of the stabilized asymmetry value sequence (SAS) exceeds a fourth limit value.

12. The method as claimed in one of the preceding claims,
wherein the Coriolis measuring device has at least one temperature sensor (16).

## Revendications

1. Procédé (100) destiné à l'exploitation d'un débitmètre Coriolis (1), lequel débitmètre est destiné à mesurer une densité et/ou un débit massique d'un produit s'écoulant à travers une conduite,
lequel débitmètre Coriolis comprend :
au moins un tube de mesure (10) destiné à guider le produit, lequel tube de mesure présente respectivement une entrée (10.1), une sortie (10.2) et une paroi de tube de mesure (10.4) enfermant un canal intérieur de tube de mesure (10.3) ;
au moins un excitateur (11) destiné à générer des vibrations du tube de mesure ainsi qu'un premier capteur côté entrée (12.1) et un deuxième capteur côté sortie (12. 2) destinés à mesurer les vibrations du tube de mesure, l'excitateur ainsi que les capteurs présentant chacun un dispositif à bobine (13) avec au moins une bobine (13.1) et chacun un dispositif à aimant (14) avec au moins un aimant (14.1),
le dispositif à bobine ainsi que le dispositif à aimant de chaque capteur étant déplacés l'un par rapport à l'autre par les vibrations du tube de mesure, une tension électrique de mesure étant alors induite dans la bobine ;
un circuit électronique de mesure/de fonctionnement (77) destiné à faire fonctionner l'excitateur, à mesurer et évaluer les tensions de mesure électriques ainsi qu'à délivrer des valeurs mesurées de la densité et/ou du débit massique ainsi que des indications de diagnostic,
lequel procédé comprend l'étape suivante :
Enregistrement des tensions de mesure des capteurs ainsi que génération d'une série de valeurs d'asymétrie (AS) au moyen des amplitudes des tensions de mesure en vue d'un diagnostic du débitmètre Coriolis (101),
**caractérisé en ce que** le procédé comprend les étapes suivantes :
Enregistrement d'un signal de mesure d'au moins une grandeur de stabilisation (102),
Génération d'une série de valeurs d'asymétrie stabilisée (SAS) sur la base de la série de valeurs d'asymétrie en fonction de la grandeur de stabilisation (103),
la grandeur de stabilisation étant basée sur l'une des grandeurs suivantes ou sur une dérivée première ou seconde de celle-ci par rapport au temps :
une fréquence de résonance du tube de mesure avec le produit ou une grandeur qui en est dérivée,
la différence de temps ou de phase entre les signaux de mesure du premier capteur et du deuxième capteur ou une grandeur qui en est dérivée,
la température de la paroi du tube de mesure,
la différence de température entre deux points de mesure de la paroi du tube de mesure.

2. Procédé selon la revendication 1,
pour lequel une valeur de dispersion (S) des valeurs mesurées d'une grandeur de stabilisation est déterminée, la série de valeurs d'asymétrie étant stabilisée au moyen de la valeur de dispersion.

3. Procédé selon la revendication 2,
pour lequel, en cas de dépassement d'une première valeur limite par la valeur de dispersion, une dernière valeur mesurée valable de la série de valeurs d'asymétrie est utilisée comme valeur actuelle de la série de valeurs d'asymétrie, ou la série de valeurs d'asymétrie est définie sur une valeur prédéterminée.

4. Procédé selon la revendication 3,
pour lequel la première valeur limite est dérivée de valeurs de dispersion et/ou d'une valeur moyenne de valeurs mesurées de la grandeur de stabilisation, ou pour lequel la première valeur limite est un paramètre configurable.

5. Procédé selon l'une des revendications 2 à 4,
pour lequel la valeur moyenne est une moyenne mobile avec une première fenêtre de temps (Z1), et
pour lequel la valeur de dispersion est une valeur de dispersion mobile avec une deuxième fenêtre de temps (Z2).

6. Procédé selon la revendication 5,
pour lequel la première fenêtre de temps (Z1) présente une durée d'au moins 0,2 seconde et notamment d'au moins 0,5 seconde et de préférence d'au moins 1 seconde et/ou
pour lequel la première fenêtre de temps présente une durée d'au plus 90 secondes et notamment d'au plus 70 secondes et de préférence d'au plus 60 secondes.

7. Procédé selon la revendication 5 ou 6,
pour lequel la deuxième fenêtre de temps (Z2) présente une durée d'au moins 2 secondes et notamment d'au moins 4 secondes et de préférence d'au moins 5 secondes et/ou
pour lequel la deuxième fenêtre de temps présente une durée d'au plus 150 secondes et notamment d'au plus 130 secondes et de préférence d'au plus 120 secondes.

8. Procédé selon l'une des revendications précédentes,
pour lequel, dans le cas où la différence de temps ou de phase ou une grandeur qui en est dérivée est inférieure à une deuxième valeur limite et dans le cas où l'asymétrie est supérieure à une troisième valeur limite,
une dernière valeur mesurée valable de la série de valeurs d'asymétrie est utilisée comme valeur actuelle de la série de valeurs d'asymétrie,
ou la série de valeurs d'asymétrie est définie à une valeur prédéterminée.

9. Procédé selon l'une des revendications 2 à 8,
pour lequel la valeur de dispersion (S) est déterminée par l'une des méthodes suivantes :
Addition des distances entre les valeurs mesurées voisines,
Addition des distances entre les valeurs mesurées pour obtenir une valeur moyenne des valeurs mesurées de la grandeur de stabilisation.

10. Procédé selon la revendication 9,
pour lequel où une cote de distance A présente la relation suivante :
A=lp1 - p2|^n avec n > 0, et p1 en tant que valeur mesurée et p2 en tant que valeur mesurée ou une valeur moyenne.

11. Procédé selon l'une des revendications précédentes,
pour lequel un avertissement est émis si une valeur de la série de valeurs d'asymétrie stabilisée (SAS) dépasse une quatrième valeur limite.

12. Procédé selon l'une des revendications précédentes,
pour lequel le débitmètre Coriolis comprend au moins un capteur de température (16).
